# EUROPEAN PATENT SPECIFICATION

(11) **EP 2 754 373 B1**
(45) Date of publication and mention of the grant of the patent: **25.12.2019**
(21) Application number: 13836183.7
(22) Date of filing: 08.11.2013
(51) Int. Cl.: D06N 3/00, D06N 7/00, A47G 27/02, B60N 3/04

(54) **FLAME-RETARDANT PLANAR BODY, CARPETING RESISTANT TO GENERATING HAZARDOUS GASES THAT USES SAID FLAME-RETARDANT PLANAR BODY, AND METHOD FOR PRODUCING SAID CARPETING RESISTANT TO GENERATING HAZARDOUS GASES**
FLAMMHEMMENDER PLANARER KÖRPER, GEGEN DIE ERZEUGUNG GEFÄHRLICHER GASE BESTÄNDIGER TEPPICHBODEN MIT DIESEM FLAMMHEMMENDEN PLANAREN KÖRPER UND VERFAHREN ZUR HERSTELLUNG DES GEGEN DIE ERZEUGUNG GEFÄHRLICHER GASE BESTÄNDIGEN TEPPICHBODENS
CORPS PLAN RETARDATEUR DE FLAMME, REVÊTEMENT DE SOL TEXTILE PRÉSENTANT UNE RÉSISTANCE À LA GÉNÉRATION DE GAZ DANGEREUX UTILISANT LEDIT CORPS PLAN RETARDATEUR DE FLAMME, ET PROCÉDÉ DE PRODUCTION DUDIT REVÊTEMENT DE SOL TEXTILE PRÉSENTANT UNE RÉSISTANCE À LA GÉNÉRATION DE GAZ DANGEREUX

(30) Priority: 08.11.2012 JP 2012260320; 08.04.2013 WO PCT/JP2013/061137; 07.11.2013 JP 2013243305
(43) Date of publication of application: 16.07.2014
(73) Proprietor: Yoshidafusa Orimono Co., Ltd., Osaka 595-0033 (JP)
(72) Inventor: YOSHIDA, Fusaki, Izumiotsu-shi Osaka 595-0033 (JP)
(74) Representative: Horn Kleimann Waitzhofer Patentanwälte PartG mbB
(86) International application number: PCT/JP2013/080842
(87) International publication number: WO 2014/073710

(56) References cited:
- JP-A- 2010 024 281
- JP-A- 2010 024 281
- JP-A- 2010 046 659
- JP-B2- 4 351 220
- US-A- 4 689 256

## Description

### TECHNICAL FIELD

The present invention relates to a flame retardant planar element which is suitable not only for interior materials of all companies' vehicles and others such as trains, automobiles and others, wall materials and ceiling materials of furniture or buildings but also for various buildings' floors as well as floors for vessels, airplanes and others when used as a floor covering, has flame resistance and fire resistance features and hardly generates hazardous gas even when heated; a floor covering hardly generating hazardous gas using the flame retardant planar element; and a production method of the floor covering hardly generating hazardous gas.
Meanwhile, the floor covering hardly generating hazardous gas using the flame retardant planar element of the present invention means a floor covering certified by testing methodologies of smoke emission and combustion toxicity test.

### BACKGROUND ART

Recently, materials with flame retardance and fire resistance are used for houses, furniture, floor coverings and others, to reduce damages caused by a fire disaster to the utmost, and usage of materials with flame retardance and fire resistance generating no hazardous gas is desired among others.
Furthermore, strict standards for flame retardance and fire resistance as well as flame resistance and hazardous gas emission have been established since a fire disaster in a place without way out such as in a vessel or other places may explode into a major disaster; therefore, the inventors of the present application has invented Patent No. 4351220 and developed a floor covering which has better flame retardance and fire resistance as well as flame resistance and hardly generates hazardous gas.

More specifically, such invention relates to a floor covering hardly generating hazardous gas, wherein a backing material layer and an skin material layer are adhered through the intermediary of adhesive material layer; the backing material layer is composed of a non-woven fabric aggregate which consists of oxidized acrylic fibers and polyester-based fibers; the combination in weight ratio is 30 to 80 percent of oxidized acrylic fibers and 20 to 70 percent of polyester-based fibers; the adhesive material layer consists of an amorphous olefin polymer composition having plainly woven mesh fabrics composed of multi-filament yarns of polyester fibers; the skin material layer is formed in the method comprising: forming piles using 100 percent wool pile yarns on a surface of a primary foundation cloth composed of a non-woven cloth of polyester fabrics; coating adhesives composed of an amorphous olefin polymer composition on the back side to prevent thread cast-off; and sticking non-combustible liquid material on the surface of the skin material layer.

In using such a floor covering hardly generating hazardous gas, there are effect that the whole material is composed of materials hard to generate hazardous gas and that it becomes possible to provide a floor covering hard to generate hazardous gas with flame retardance and fire resistance as well as flame resistance to a market.

In addition, as technologies to provide flame retardance to these floor coverings, there are means to coat a flame retardant agent such as an organophosphorus compound on a resin and a technology to mix a sodium polyborate with a resin material.
Patent Literature: Patent Publication No. 4351220
Patent Literature: Unexamined Patent Application Publication No. 7-109652
Patent Literature: Unexamined Patent Application Publication No. 2010-24281

### DISCLOSURE OF INVENTION

### PROBLEMS TO BE SOLVED BY THE INVENTION

While the floor covering hardly generating hazardous gas disclosed in the patent publication No. 4351220 has a remarkable effect of flame retardance and flame resistance as well as hardly generating hazardous gas with flame resistance, it would be desirable to have a better cushioning characteristic when people walk on the floor covering as long as it is a floor covering.

A cushioning characteristic of such a floor covering depends on a non-woven fiber assembly of a skin material layer and a backing material layer; the skin material layer has a certain level of cushioning characteristic with piles comprised of 100 percent wool pile yarns on the surface of a primary foundation cloth consisting of polyester fibers non-woven cloth; it has been especially desired to develop a backing material layer having a most appropriate cushioning characteristic with a feature of hardly generating hazardous gas with flame retardance and fire resistance as well as flame resistance.

In addition, the floor covering hardly generating hazardous gas has obviously better workability if it has flexibility to be bent or wound when it is used as a tile carpet after cutting and processing, as a long carpet with designated width and length after cutting, or when it is transported from a manufacturing plant to a construction site or carried to an actual application place at the construction site.

Moreover, a detachment trouble is likely to occur during a construction application if there is no certain flexibility and elasticity; at any rate, development of a floor covering hardly generating hazardous gas with a totally new backing material has been desired, wherein the backing material has a feature of hardly generating hazardous gas with sufficient flame retardance and fire resistance as well as flame resistance, and also has a certain flexibility and elasticity.

Furthermore, as to the floor covering hardly generating hazardous gas, there were various problems like that, when a flame retardant such as an organic phosphorous compound is applied to a resin, the phosphorus compound's adhesiveness to the resin is insufficient; when a sodium polybutene is mixed and kneaded in the resin, a part of the sodium polyborate foams at the mixing and kneading temperature (150 C or above) at which the sodium polyborate is mixed and kneaded with a vinyl chloride resin or an olefin resin; and a certain resin material containing less hydroxyl groups causes a low affinity with a sodium polybutene and a less build-up in application or coating, resulting insufficient flame retardant effect.
US 4689256A discloses a carpet tile having improvide flame resistance, which carpet tile comprises a primary backing having a fibrous face and a fibrous back; a barrier layer adjacent the fibrous back of which barrier layer comprises a vinyl polymer and a metal salt, flame-ratardant filler material in an amount sufficient to provide a flame-retardant barrier layer, and which vinyl polymer is compatible with a thermoplastic polymer layer; and a vinyl chloride resin backing layer bonded to the barrier layer, to impart stability and free-laying properties to the carpet tile.
JP 2010-024281A1 discloses a flame-retardant resin composition containing sodium polyborate and a resin which is selectable from a thermoplastic resin, a thermosetting resin, a biodegradable resin, or the like, depending on the desired application and flame-retardancy.

### MEANS OF SOLVING PROBLEMS

Namely, to solve the problems, the present invention has developed a flame retardant planar element with sufficient flame retardant effect and a totally new flame retardant planar element with a cushioning characteristic, flexibility and elasticity using the flame retardant planar element, and a floor covering hardly generating hazardous gas using the flame retardant planar element, and a production method for the floor covering hardly generating hazardous gas as defined in the claims.

### EFFECTS OF THE INVENTION

The flame retardant planar element of the present invention includes at least an inorganic substance such as a sodium polyborate in at least any of one surface or other surface of a flexible planar element which can be used for a floor covering hardly generating hazardous gas (A), and has a thermoplastic resin layer with at least an acetyl group. Therefore, there is an effect that a flame retardant planar element with superior flame retardance can be formed with a hydrogen bonding strongly affecting to both of a sodium polyborate and a flexible planar element, in case an acetyl group is exsisting in a thermoplastic resin.
In addition, there is an effect that a thermoplastic resin can be mixed and kneaded with a sodium polyborate without foaming, when a melting point of a thermoplastic resin is lower than a low-temperature characteristic of a vinyl chloride as an example, which is usually used for a backing material of a floor covering hardly generating hazardous gas. Additionally, there is an effect that usage of an inorganic substance such as a sodium polyborate will place no burden on the environment and generate no hazardous chemical substance causing sick house syndrome as well.

Furthermore, there are effects that, when a thermoplastic resin layer is formed on either one of an EVA-based emulsion coating layer on which EVA-based emulsion that is an ethylene-vinyl acetate copolymer containing at least sodium polyborate is coated and dried or an EVA-based resin layer that is an ethylene-vinyl acetate copolymer containing at least sodium polyborate, an ethylene-vinyl acetate copolymer (EVA: ethylene-vinyl acetate copolymer) has better low-temperature characteristic, has also greater impact strength with low density as well as flexibility and nontoxic feature, and can be mixed and kneaded with a sodium polyborate without foaming through the intermediary of low-temperature characteristic lower than the one of a vinyl chloride as an example, which is usually used for a backing material.
In addition, there are effects that an ethylene-vinyl acetate copolymer resin which contains an acetyl group can form a flame retardant planar element having better flame retardance with hydrogen bonding strongly affecting to both of a sodium polyborate and a flexible planar element (for example in case of being formed by a polyester-fiber-based non-woven cloth), and usage of an inorganic substance such as a sodium polyborate results no burden on the environment as well as no generation of hazardous chemical substance causing sick house syndrome and others.

Furthermore, there is an effect that, when an EVA-based emulsion coating layer is formed on at least any of one surface or other surface of a flexible planar element, and in case a EVA-based resin layer is laminated on the EVA-based emulsion coating layer, a flame retardant planar element can further increase the degree of flame retardance of a flame retardant planar element.

There is an effect that, when one side or other side of a flexible planar element of a flame retardant planar element has a thermoplastic resin layer, by forming piles on one side or other side of a flexible planar element facing to the thermoplastic resin layer, a flame retardant planar element having better flame retardance can be used as a primary foundation cloth for a floor covering hardly generating hazardous gas.

In addition, there are effects that, in the event a flame retardant planar element has other flexible planar element laminated on one side or other side of the flexible planar element facing to the surface on which piles are formed and at least any of one side or other side of of the other flexible planar element has at least either one of an EVA-based emulsion coating layer or an EVA-based resin layer, a tensile strength of the flame retardant planar element can be improved, cutting size can be more consistent in cutting to a designated size, and flame retardance can be more improved when the flame retardant planar element is used as a primary foundation cloth for a floor covering hardly generating hazardous gas.

Furthermore, there is an effect that, when a backing material layer is laminated on a thermoplastic resin layer of a flame retardant planar element, a flame retardant planar element having a backing material layer hard to break away with features of improved flame retardance and adhesion of the thermoplastic resin layer (EVA-based emulsion coating layer or EVA-based resin layer) can be obtained.

Additionally, there is an effect that, when either one of a flexible planar element, a thermoplastic resin layer or a backing material layer of a flame retardant planar element has suppressing means to reduce at least either one of shrinkage or bending of a flame retardant planar element, a flame retardant planar element cut into a designated size can be laid side by side without gap through the intermediary of adhesives on walls, ceilings, floors and any other places.

Furthermore, there is an effect that, when either one of a flexible planar element, a thermoplastic resin layer or a backing material layer of a flame retardant planar element has at least any one of vibration-free means or sound absorption means, a flame retardant planar element can be laid through the intermediary of adhesives in each place where less vibration or less sound is desired.

In addition, a flame retardant planar element may include radiation shielding material such as tungsten and lead which can be easily mixed with EVA resin as an example; therefore, when these radiation shield materials are contained in EVA-based resin layer, a flame retardant planar element with additional value of radiation shielding as well as flame retardance can be obtained.

Additionally, there is an effect, since a backing material layer of a flame retardant planar element consists of at least either one of a pitch-based carbon fiber or a PAN-based carbon fiber and a non-woven fiber assembly such as a polyester-based fiber, and the combination ratio therefor is 30 to 80 weight percent for at least either one of the pitch-based carbon fiber or the PAN-based carbon fiber and 20 to 70 weight percent for the polyester-based fiber, and each fiber's thickness is between 2.0 to 16.0 dtex and cut length is in the range of 20 to 160 mm, the backing material layer has a feature of hardly generating hazardous gas with flame retardance and fire resistance as well as flame resistance and can have a most suitable cushioning characteristic.

Furthermore, there is an effect that, in case of the weight of a backing material layer of a flame retardant planar element being 0.01 to 1.5m2, the backing material layer (10) itself can have flexibility.

Additionally, there is an effect that, by limiting the thickness of a backing material layer (10) of a flame retardant planar element to the range of 3.0 to 15.0 mm through a needle punch process or other process, the backing material layer (10) itself can have both flexibility and elasticity.

In addition, according to a floor covering hardly generating hazardous gas (A) using a flame retardant planar element, the floor covering hardly generating hazardous gas (A) has a skin material layer which uses a flame retardant planar element on which piles (22) are formed (for example, 100 percent wool pile yarns being formed on the surface of a primary foundation cloth consisting of polyester fiber non-woven cloth) as a primary foundation cloth (21), and the skin material layer (20) and the backing material layer (10) are laminated through the intermediary of the thermoplastic resin layer and/or other adhesive material layer (30), and moreover the thermoplastic resin layer and/or other adhesive material layer (30) (for example, those being formed with at least either one of a styrene-butadiene-styrene block copolymer composition or an amorphous olefin polymer composition) integrally consists of a flame retardant planar element forming the skin material layer (20) with or without the intermediary of a plainly woven mesh fabric (for example, the one formed from multi-filament yarns of polyester fabric, or others) and the backing materila layer (10).

Therefore, there are significant effects that the floor covering hardly generating hazardous gas (A) can provide significantly improved heat-setting property without reducing flame resistance, can have greater flame retardance and flame resistance because of higher heat resistance of 150 to 200 C of heat resistance temperature, does not generate hazardous gas even if directly exposed to a fire, does not flare up because of its self-extinguishing feature and does not burn itself, and damages to a backing material itself caused by combustion or fusion are minimal even if an fire ignition occurs; additionally the floor covering hardly generating hazardous gas (A) can have a most suitable cushioning characteristic as well as good adhesiveness resistant to water, tensile strength and durability with good stability of cutting size, and can have flexibility to be bent or wound even if used as a tile carpet after cutting process or as a long carpet in designated width and length after cutting, when transported from a plant to a construction site and carried to an actual application place at the construction site, and can have flexibility and elasticity to prevent separation.

Moreover, there are effects that, when a thermoplastic resin layer and/or emulsion have at least one of an acetyl group such as an ethylene-vinyl acetate copolymer, contain at least an inorganic substance such as a sodium polyborate, and are in the form of sheet having designated thickness or in liquid, usage of a flexible planar element is not required; a thermoplastic resin layer formed in the shape of sheet as mentioned above can be directly used at every place such as various floor coverings and/or interior materials for walls, floos, automobiles, trains, airplanes as a flame-retardant material which places no burden to the environment and generates no hazardous chemical causing sick house syndrome, and can be used for a wide variety of fields as flame-retardant spray or flame-retardant adhesive.

In addition, there is an effect that, since a thermoplastic resin layer has reinforcing means to prevent cracks and fragmentations of the thermoplastic resin layer when a thermoplastic resin layer is bent, pushed or pulled, the thermoplastic resin layer with small numbers of defective products as a result of improvement of strength of a thermoplastic resin layer which especially tends to have insufficient strength against tensile force can be provided during manufacturing process as well as application to wide variety of places.

### Brief Description of the Drawings

FIG. 1 is a partially cutout perspective view of a floor covering hardly generating hazardous gas in accordance with one embodiment of the present invention.
FIG. 2 is a partially schematic sectional view of a floor covering hardly generating hazardous gas in accordance with one embodiment of the present invention.

### Best Mode for Carrying out the Invention

One embodiment of a flame retardant planar element, a floor covering hardly generating hazardous gas using the flame retardant planar element and a manufacturing method of the floor covering hardly generating hazardous gas are explained below based on the figures. In the present invention, an EVA-based emulsion-coating layer represents a layer coated and dried with emulsion including at least a sodium polyborate in an ethylene-vinyl acetate copolymer, and an EVA-based resin layer represents a resin including at least a sodium polyborate in an ethylene-vinyl acetate copolymer.

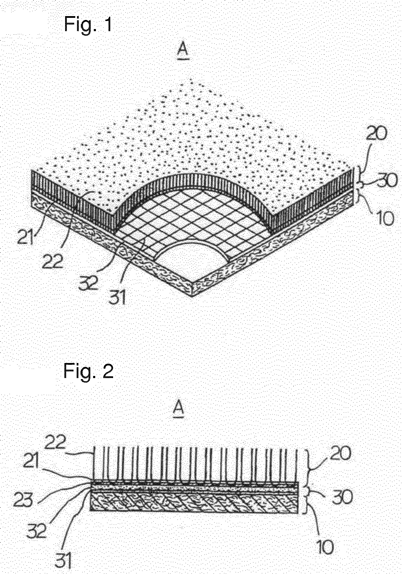

Prior to stating a manufacturing method of a floor covering hardly generating hazardous gas A based on FIGs. 1 and 2, a flame retardant planar element which can also be utilized as a primary foundation cloth 21 of the floor covering hardly generating hazardous gas A is explained. In the flame retardant planar element, there is at least a sodium polyborate as an inorganic substance which is contained in at least any of one surface or other surface of the flexible planar element and has a thermoplastic resin layer with at least one of an acetyl group.
Therefore, there is an effect that, a flame retardant planar element with superior flame retardance can be formed with a hydrogen bonding strongly affecting to both of a sodium polyborate and a flexible planar element, in case the thermoplastic resin contains acetyl group.
In addition, there is a merit that, when a melting point of a thermoplastic resin is lower than a low-temperature characteristic of vinyl chloride as an example, which is usually used for a backing material of a floor covering hardly generating hazardous gas, a thermoplastic resin can be mixed and kneaded with a sodium polyborate without foaming.

Furthermore, there are effects that, when a thermoplastic resin layer is formed on either one of an EVA-based emulsion coating layer on which EVA-based emulsion that is an ethylene-vinyl acetate copolymer containing at least a sodium polyborate is coated and dried or an EVA-based resin layer that is an ethylene-vinyl acetate copolymer containing at least a sodium polyborate, an ethylene-vinyl acetate copolymer (EVA: ethylene-vinyl acetate copolymer) has a better low-temperature characteristic, has also greater impact strength with low density as well as flexibility and nontoxic feature, and can be mixed and kneaded with a sodium polyborate without foaming through the intermediary of a low-temperature characteristic lower than the one of a vinyl chloride as an example which is usually used for a backing material.
In addition, there are merits that a flame retardant planar element having better flame retardance can be formed with a hydrogen bonding strongly affecting to both of a sodium polyborate and a flexible planar element (for example, in case of being formed with a polyester-fiber-based non-woven cloth), usage of an inorganic substance such as a sodium polyborate results no burden on the environment, and no hazardous chemical substance causing sick house syndrome is generated.

In addition, there is a merit that, in the event at least any of one surface or other surface of a flexible planar element has an EVA-based emulsion coating layer and an EVA-based resin layer is laminated on the EVA-based emulsion coating layer, a flame retardant planar element can further increase the degree of a flame retardance of a flame retardant planar element.

There is an effect that, when one side or other side of a flexible planar element of a flame retardant planar element has a thermoplastic resin layer, by forming piles on one side or other side of a flexible planar element facing to the thermoplastic resin layer, a flame retardant planar element having better flame retardance can be used as a primary foundation cloth for a floor covering hardly generating hazardous gas.

Furthermore, there is a merit that, in the event a flame retardant planar element has other flexible planar element being laminated on one side or other side of a flexible planar element facing to the surface on which piles are formed and at least any of one side or other side of of the other flexible planar element has at least either one of an EVA-based emulsion coating layer or an EVA-based resin layer, tensile strength of a flame retardant planar element can be improved, cutting size can be more consistent in cutting to a designated size and flame retardance can be more improved, when the flame retardant planar element is used as a primary foundation cloth for a floor covering hardly generating hazardous gas.

Moreover, there is an effect that, when a backing material layer is laminated on a thermoplastic resin layer of a flame retardant planar element, a flame retardant planar element having a backing material layer hard to break away can be obtained while improving features of flame retardance and adhesion of the thermoplastic resin layer (EVA-based emulsion coating layer or EVA-based resin layer).

Additionally, there is a merit that, when either one of a flexible planar element, a thermoplastic resin layer or a backing material layer of a flame retardant planar element has suppressing means to reduce either one of shrinkage or bending, a flame retardant planar element cut into a designated size can be laid side by side without gap using adhesives on walls, ceilings, floors and any other places.
The shrinkage or bending of a flame retardant planar element herein are caused by adhesives applied to a floor and others being mainly absorbed in a backing material layer of a flame retardant planar element; therefore, a resin sheet such as polyethylene as an example may be attached so as to prevent absorption of adhesive in a backing material layer; and specific material, structure and others of suppressive measures to prevent shrinkage, bending or others of a specific flame retardant planar element are not designated.

Moreover, either one of a flexible planar element, a thermoplastic resin layer or a backing material layer of a flame retardant planar element may have at least either one of vibration-free means or sound absorption means.
For example, when contents of vinyl acetate in an EVA-based resin layer is increased, elasticity and flexibility are improved, resulting that vibration-free and sound absorption characteristics can be improved.
While no specific vibration-free means and sound absorption means are specified at all, there is a merit that, when either one of vibration-free means or sound absorption means is provided, a flame retardant planar element can be placed through the intermediary of adhesives at the places where no vibration or sound is desired.

In addition, a flame retardant planar element may contain a radiation shielding material; an EVA resin can be easily mixed with tungsten and lead as an example; therefore, there is a merit that, when these radiation shielding materials are contained in an EVA-based resin layer, a flame retardant planar element with additional value of radiation shielding as well as flame retardance can be obtained.

Moreover, there are effects that, when a thermoplastic resin layer and/or emulsion have at least one of an acetyl group such as an ethylene-vinyl acetate copolymer, contain at least an inorganic substance such as sodium polyborate, and are in the form of sheet with designated thickness or in liquid, usage of a flexible planar element is not required; a thermoplastic resin layer can be developed towards a market as a product having better versatility and applicability such that the thermoplastic resin layer formed in the shape of sheet as mentioned above can be used at every place such as various floor coverings and/or interior materials for walls, floors, automobiles, trains, airplanes and others as a flame-retardant material which places no burden to the environment and generates no hazardous chemical causing sick house syndrome, and the thermoplastic resin in emulsion form can be used for a wide variety of fields as flame-retardant spray or flame-retardant adhesive.

In addition, there is a merit that, in case a thermoplastic resin layer has reinforcing means of a sheet such as a resin mesh sheet or a sheet using resin for example to prevent cracks and fragmentations of a thermoplastic resin layer formed in the shape of a sheet or a mat when a thermoplastic resin layer is bent, pushed or pulled, a thermoplastic resin layer with small numbers of defective products as a result of improvement of strength of a thermoplastic resin layer itself which especially tends to have insufficient strength against tensile force can be provided during a manufacturing process as well as application to wide variety of places.

Meanwhile, details relating to a flexible planar element, a thermoplastic resin layer or a backing material layer are hereinafter explained.
First of all, in the embodiments, EVA-based emulsion is obtained by mixture of sodium polyborate powder and EVA emulsion of which solid content is 5 to 80 percent, preferably 10 to 60 percent.
The sodium polyborate powder can be obtained from an aqueous solution of the brand name "Fire-less B Liquid" manufactured by TrustLife Co. Ltd through spray-dry method or freeze-dry method.
The Fire-less B Liquid is an aqueous solution of which density of sodium polyborate is thicker than solubility (20 C) of boric acid or borax alone, and mixed quantity of sodium polyborate power is desirably in the range of 60 to 150 weight percent of EVA emulsion (solid content).

In addition, an EVA-based resin used in this embodiment is formed in a sheet shape after mixing and kneading a sodium polyborate and an EVA resin at the temperature of 150 C or below. Adding quantity of sodium polyborate is desirably in the range of 5 to 120 percent or preferably 20 to 100 percent of an EVA resin.
Melting point of an EVA resin becomes lower with the increasing of blending ratio of vinyl acetate in resin.
The melting point was 94 C in case of vinyl acetate's blending ratio in EVA resin being 10 weight percent.
Additionally, the melting point was 61 C when the ratio was 33 weight percent.
Blending ratio of vinyl acetate in EVA resin is desirably in the range of 10 to 40 weight percent, considering mixing and kneading process of EVA resin and a sodium polyborate.

A conventional carpet is generally structured as a primary foundation cloth with piles on its surface being laminated on a backing material using a styrene-butadiene polymer (SBR) as adhesion layer.
On the other hand, an EVA-based resin layer of the present invention is excellent as a flame retardant member which produces no smoke, does not exert a burden on the environment and generates no hazardous chemical substances causing sick house syndrome and others, but also as an adhesive resin.
Therefore, a backing material layer may be laminated on the back side of a flame retardant planar element which can be used as a primary foundation cloth after forming piles on its surface with either one of an EVA-based emulsion coating layer coated and dried with EVA-based emulsion or an EVA-based resin layer.
This results that the portion containing an EVA resin and a sodium polyborate has flame retardant and adhesion functions.

In the present invention, a flame retardant planar element on which surface piles are formed can be used as a primary foundation cloth on which back side a flame retardant planar element having other flexible planar element may be laminated as a secondary foundation cloth; this being the case, tensile strength of a flame retardant planar element itself is improved and there is a merit that cutting size is more stabilized in using especially for a floor covering such as a carpet.

In one embodiment of the present invention, while wool yarns are used for piles, nylon, polyester or polypropylene yarns may be used; and while a flexible planar element of a flame retardant planar element used as a primary foundation cloth is formed from a polyester-fiber-based non-woven cloth, a polyester woven foundation cloth, a carbon fiber woven foundation cloth or a polypropylene fiber woven foundation cloth may be used, of which materials are not specified.
In addition, traditionally used jute or blended materials of hemp and cotton may be used for a backing material in case of interior material being long floor covering, and a specific material and a manufacturing method for the backing material are not specified.

Furthermore, a glass fiber non-woven cloth, a mesh glass fiber net or a polyester-based net may be used as a second foundation cloth in case of an interior material being a tile-like floor covering; no specific material or staple of a secondary foundation cloth is specified; and other flame retardant planar element different from the one for the primary foundation cloth may be obviously used for a secondary foundation cloth.

There is a merit that, in case a flame retardant planar element is used for a secondary foundation cloth, EVA-based resin layer functions as strengthened fabric through each EVA-based resin being melt-inflated each other in laminating an EVA-based resin layer with heat.
Furthermore, it is obvious that a flame retardant fabric non-woven cloth may be laminated as a backing material layer in case of tile-like floor covering.

Meanwhile, in the present invention, starch may be mixed in the ratio of 2 to 5 percent, in mixing at least an inorganic substance such as a sodium polyborate with a thermoplastic resin layer having one of an acetyl group; and starch has an effect to further improve adherence in attaching a sodium polyborate to a polypropylene non-woven cloth.

Furthermore, in additon to a sodium polyborate, an aluminium hydroxide EVA resin, an aluminium hydroxide or a magnesium hydroxide in the mixture ratio of 5 to 30 percent of a sodium polyborate as a flame retardant may be added; 1 to 50 percent of calcium carbonate which is a modifying agent of EVA resin may be added; and, in either case, there is an effect that flame retardance can be further improved.

EVA resin has excellent miscibility with a radiation shielding material such as tungsten and lead; therefore, an interior material with radiation shielding in addition to flame retardance can be obtained when these radiation shielding materials are contained in an EVA-based resin layer.
Consequently, for example, in measuring radiation of contaminated soil using a sheet of EVA resin with 1 mm thick mixed with tungsten powder in the same amount of the EVA resin, the radiation dose was reduced from 11.0 µSv/h without the sheet to 5.0 µSv/h with the sheet.
Tungsten powder can be mixed in the ratio of 10 to 500 percent of EVA resin quantity, preferably in the range of 50 to 400 percent.
In addition, effects of vibration-free and sound absorption (soundproofing and sound insulation) can be added when mixed with these metal powders.

In the present invention, for example, in case of a long interior material, when an EVA-based emulsion is coated and dried on a back side of a foundation cloth on which surface piles are formed through tufted process or a fused EVA-based resin sheet is laminated on a back side of this foundation cloth, a backing material may be laminated with heat on the back side as necessary; and in case of a tile interior material, a secondary foundation cloth and an EVA-based resin layer are lapped over on a back side of a primary foundation cloth on which surface piles are formed through a tufted process and then laminated with heat, and , as necessary, a backing material layer is lapped over and laminated with heat and then cut in the shape of a tile with designated size, where a primary foundation cloth on which EVA-based emulsion is coated and dried may be used.

The followings are testing results of the above-mentioned flame retardant planar element.
First of all, specimen A (not indicated in FIG.) has been prepared wherein wool yarns are used as a pile material, EVA-based emulsion consisting of its solid content in the ratio of 50 percent and sodium polyborate powder of almost the same quantity thereof is applied on the back side of a foundation cloth (a flexible planar element) composed of a polyester non-woven cloth and then dried.
While 1300 C flame of a burner is directly applied to this specimen A hung down with its cross section being vertical, only carbonization was observed with sodium polyborate foamed, resulting no combustion.

In addition, specimen B (not indicated in FIG.) similar to the above-mentioned specimen A other than usage of nylon piles of nylon yarns on its surface was prepared; while 1300 C flame of a burner is directly applied as done for the specimen A, only carbonization was observed with sodium polyborate foamed, resulting no combustion.

Therefore, since EVA resin becomes incombustible by adding, mixing and kneading a sodium polyborate and is adjustable in its physical property according to mixture ratio of an ethylene and a vinyl acetate, EVA resin can be utilized for a floor covering hardly generating hazardous gas by combining with a foundation cloth (a flexible planar element) of a floor covering and others.
Such sodium polyborate added EVA resin with incombustible feature can be also utilized as an incombustible resin material for incombustible resin moldings, high voltage cable incombustible covering materials, incombustible device materials, incombustible building materials such as building sash and incombustible adhesive.

Moreover, since a flame retardant planar element can be easily formed to the shapes of film and sheet, there is a significant effect that the flame retardant planar element with reinforced incombustible fabrics can be also utilized as incombustible materials for surface coating and incombustible film materials as well as a reinforced incombustible sheet, an incombustible ceiling membrane matrix, an incombustible tent cloth, an incombustible hood fabric, a protection sheet for fusion cutting, an incombustible cloth and others.

In addition, a sodium polyborate has a function to shield neutron beams, therefore can effectively shield gamma rays of tungsten and others.
Consequently, there is an affect that a flame retardant planar element can be utilized as a flexible sheet, such as radiation shielding coil materials used for pipes of various factories on contaminated soils, radiation shielding incombustible materials for radiation control offices, radiation shielding incombustible sheet materials, of which tensile strength is reinforced by internal usage of incombustible fabrics, incombustible materials for radiation shielding suits, radiation shielding incombustible cloth and resin molded radiation shielding incombustible materials for example.

Furthermore, EVA emulsion to which a sodium polyborate is added can be utilized as flame retardant emulsion, therefore can be used not only for interior materials but also for a wide variety of fields such as flame retardant spray and adhesive.

A manufacturing method of a floor covering hardly generating hazardous gas is stated below.
Such a manufacturing method of a floor covering hardly generating hazardous gas comprises each of the following processes of forming a backing material layer, a skin material layer using a flame retardant planar element with manufacturing a floor covering hardly generating hazardous gas.

First of all, a floor covering hardly generating hazardous gas which is cut into a designated size after either of the following method:
forming a backing material layer (10) consisting of a non-woven fiber aggregate by mixing 30 to 80 weight percent of at least either one of pitch-based carbon fibers of which thickness is between 2.0 to 16.0 dtex and cut length is in the range of 20 to 160 mm or PAN-based carbon fibers of which thickness is between 2.0 to 16.0 dtex and cut length is in the range of 20 to 160 mm, and 20 to 70 weight percent of polyester-based fibers of which thickness is between 2.0 to 16.0 dtex and cut length is in the range of 20 to 160 mm,
forming a flame retardant planar element having either one of an EVA-based emulsion coating layer coated and dried with EVA-based emulsion including at least a sodium polyborate in an ethylene-vinyl acetate copolymer on at least any of one surface or other surface of a flexible planar element formed with polyester fibers, or an EVA-based resin layer including at least a sodium polyborate in an ethylene-vinyl acetate copolymer,
forming a skin material layer (20) by forming piles (22) with pile yarns on a surface of one side of the flame retardant planar element so that the flame retardant planar element is used as a primary foudation cloth (21), and
overlaying the backing material layer (10) and a flame retardant planar element which forms the skin material layer and polymerizing to adhere the same by applying press and heat, with or without an intermediary of a plainly woven mesh fabric between the backing material layer (10) and the flame retardant planar element so that an EVA-based resin layer formed on the flame retardant planar element acts as an adhesive material layer on the back side of the flame retardant planar element formed as a skin material layer; or
forming an skin material layer (20) by applying adhesive using at least either one of a styrene-butadiene-styrene block copolymer composition or an amorphous olefin polymer composition on the back side of a flame retardant planar element on which the piles (22) are formed, to prevent thread cast-off, and then coating (adhesion material layer 30) a substance in past form using at least either one of a styrene-butadiene-styrene block copolymer composition or a amorphous olefin polymer composition on the backing material layer (10), and then overlaying plainly woven mesh fabrics, and then heating the same, and then overlaying a flame retardant planar element forming the skin material layer (20), and adhesively polymerizing the same.

Consequently, a whole material is comprised of materials hardly generating hazardous gas with flame retardance and fire resistance as well as flame resistance, and a backing material layer 10 mixed with at least either one of carbon fibers or oxidized acrylic fibers and polyester-based fibers is formed as non-woven fibers aggregate, providing improved heat-setting property and high density, resulting improved strength as a backing material.

Furthermore, in the event that either one of a styrene-butadiene-styrene block copolymer composition containing a plainly woven mesh fabric comprised of multi-filament yarns of polyester fabric 32 or an amorphous olefin polymer composition is used for an adhesive material layer 30, tensile strength with good adherence resisting against water as well as durability with improved cutting dimensional stability can be provided.

Moreover, in the event that piles are formed with wool 100 percent pile yarns on the surface of a primary foundation cloth comprised of a polyester fabric non-woven cloth and adhesive is applied to the back side thereof to prevent thread cast-off, a skin material layer 20 with a good cushioning characteristic is provided, and thread cast-off and fracture hardly occurs since a skin material layer 20 is strongly integrated as a whole.

In addition, since a backing material layer 10 is formed by a non-woven fibers aggregate which is a mixture of at least either one of carbon fibers obtained after heat carbonization process or oxidized acrylic fibers and polyester-based fibers, and the mixture ratio therefor is 30 to 80 weight percent for at least either one of the carbon fibers or oxidized acrylic fiber and 20 to 70 weight percent for the polyester-based fibers, and each fiber's thickness is between 2.0 to 16.0 dtex and cut length is in the range of 20 to 160 mm, there is an effect of a characteristic of hardly generating hazardous gas with flame retardance and fire resistance as well as flame resistance and a most suitable cushioning characteristic.

Additionally, there is an effect that, in case of the weight of a backing material layer being 0.01 to 1.5 kg/m², the backing material layer 10 itself can have flexibility.

In addition, there is an effect that, by limiting the thickness of backing material layer 10 to the range of 3.0 to 15.0 mm through needle punch process or other process, the backing material layer 10 itself can have both flexibility and elasticity.

Furthermore, the backing material layer 10 is formed by a non-woven fibers aggregate which is a mixture of at least either one of pitch-based carbon fibers or PAN-based carbon fibers and polyester-based fibers (including heat bonding fiber); in the event that PAN-based carbon fibers (oxidized acrylic fibers being obtained through heat treatment of polyacrylonitrile based precursor in oxidizing atmosphere) is utilized for carbon fibers used for the backing material layer 10 for example, damages of a backing material itself caused by combustion and fusion is insignificant even if a backing material catches a fire; and the backing material can form non-woven fibers aggregate with strength, flexibility and elasticity in its manufacturing process since oxidized acrylic fibers have moderate strength and elasticity.

In addition, in case a pitch-based carbon fiber (by-product of petroleum, coal, coal tar and others) is used instead of the above-mentioned PAN-based carbon fiber, damages of a backing material itself caused by combustion and fusion can be diminished.
In summary, a backing material layer 10 is required to be formed by a non-woven fibers aggregate which is a mixture of at least either one of pitch-based carbon fibers or PAN-based carbon fibers and polyester-based fibers.

Such non-woven fibers aggregate uses the oxidized acrylic fiber mixed with polyester-based fibers to increase a heat-setting property; this being the case, in manufacturing process, a heat-setting property is improved by interlocking polyester-based fibers through pressure cooling after heated in post-process of needling (needle punch process or other process); therefore density of the non-woven fibers aggregate can be maintained high, and its flame retardance as well as dimensional stability can be improved.

Further, while the oxidized acrylic fiber alone does not have sufficient rigidity and hardly keeps high density state, a non-woven fiber aggregate can keep designated density by mixture of polyester-based fibers with high rigidity and perform excellent functions as a backing material.

Therefore, since usage of polyester-based fibers (including heat bonding fibers) provides sufficient heat-setting property as well as relatively high heat resisting property, disadvantage of damaging heat resisting property of a backing material can be avoided and a backing material having relatively high heat resisting property of 150 C to 200 C of heat resisting temperature can be obtained.
Meanwhile, while polyester-based fibers are used to mix with oxidized acrylic fibers in one embodiment of the present invention, aramid fibers may be used instead thereof.

Mixture ratio of the oxidized acrylic fibers and polyester-based fibers is preferably 30 to 80 weight percent of the oxidized acrylic fibers and 20 to 70 weight percent of the polyester-based fibers.
By reducing the mixing ratio of polyester-based fibers as such, a backing material with significantly improved heat-setting property without reducing flame resistance not so much can be obtained.

Since a backing material layer 10 of a floor covering A structured to use the above-mentioned backing material has high flame retardance and flame resistance, the backing material layer does not generate hazardous gas even if directly exposed to a fire, does not burst into flames through immediately self-extinguishing, resulting minor damages caused by combustion and fusion to a backing material itself even if there is a fire.

In addition, there are merits that a floor covering hardly generating hazardous gas can be manufactured according to an easy manufacturing process keeping a material cost low by cutting the same into a designated size, after the following steps: forming a skin material layer 20 by forming piles 22 with pile yarns (100 percent wool) on a surface of one side of the flame retardant planar element so that the flame retardant planar element is used as a primary foundation cloth 21; and then overlaying the backing material layer 10 and a flame retardant planar element forming the skin material layer 20, and adhesively polymerize the same by applying press and heat with or without the intermediary of a plainly woven mesh fabric (for example formed with multi-filament yarns of polyester fabrics) between the backing material layer 10 and the flame retardant planar element so that an EVA-based resin layer is formed on the back side of a flame retardant planar element formed as a skin material layer as an adhesive material layer.

Furthermore, a floor covering hardly generating hazardous gas can be manufactured by a following method without doing the above process, the method comprising: forming a skin material layer 20 by applying adhesive using at lease either one of a styrene-butadiene-styrene block copolymer composition or an amorphous olefin polymer composition on the back side of a flame retardant planar element on which piles 22 are formed to prevent thread cast-off; and then coating (adhesion material layer 30) a paste form substance using either one of a styrene-butadiene-styrene block copolymer composition or a amorphous olefin polymer composition on the backing material layer 10; and then overlaying plainly woven mesh fabrics (formed with multi-filament yarns of polyester fabrics), and then heating the same, and then overlaying a flame retardant planar element forming the skin material layer (20); and then polymerizing to adhere the same by applying press and heat and cutting the same into a designated size.

While at least either one of a styrene-butadiene-styrene block copolymer composition 32 containing a mesh fabric 31 composed of multi-filament yarns of polyester fibers or an amorphous olefin polymer composition is used for an adhesive material layer in this manufacturing method, an adhesive material hardly generating hazardous gas in combustion such as a compsition containing an amorphous olefin polymer composition with a crystalline polypropylene, a tackifier, a viscosity-reducing melt agent or a filler as a sub-polymer for example is preferable, and various additives such as a flame retardant agent or a coloring agent may be mixed as necessary. Examples of amorphous olefin polymer are an APAO (amorphous polyolefin), an APP (amorphous polypropylene), an amorphous butene polymer. In addition, a polymer composition may contain an amorphous olefin polymer as main polymer as well as other resin components having no halogen such as crystalline polypropylene.
Furthermore, in addition to the sub-polymer, a tackifier such as an aliphatic petroleum resin, a viscosity-reducing melt agent such as wax, various fillers, additives such as various flame retardant agents and others may be mixed as necessary.

While a floor covering A with improved strength and excellent cutting size stability can be obtained due to the polyester fibers contained in the adhesion layer with high tensile strength and a hard-to-stretch characteristic, an adhesion layer 30 with significant water proof adhesion layer can be formed in case of a styrene-butadiene-styrene block copolymer composition 32 being used for an adhesion layer 30.

In addition, vertical and horizontal strength and cutting size stability can be improved by using a plainly woven cloth consisting of multi-filament yarns of polyester fibers as the mesh fabric 31.

Further, while an adhesion layer 30 contains one layer of mesh fabric 31 consisting of multi-filament yarns of polyester fabrics in one embodiment of the present invention, which is not the only way, it is obvious that an adhesion layer may be structured to contain multiple layers of mesh fabrics.

In case that an adhesive material layer of a floor covering A is structured as mentioned above, a floor covering A which has a good adhesive property due to at least either one of a styrene-butadiene-styrene block copolymer composition 32 or an amorphous olefin polymer composition, water proof feature due to a mesh fabric 31 composed of multi-filament yarns of polyester fabric, excellent tensile strength, good cutting size stability and increased durability are obtained.

Since a skin material layer 20, which uses a flame retardant planar element with a flexible planar element consisting of a polyester fabric non-woven cloth as a primary foundation cloth 21, on which surface piles 22 are formed with 100 percent wool pile yarns, on which back side adhesive 23 comprised of at least either one of a styrene-butadiene-styrene block copolymer composition 32 or a amorphous olefin polymer composition is applied to prevent thread cast-off, forms a material hardly generating hazardous gas, an incombustible agent of which composition is a sodium salt of borate ion polymer may be adhered by spraying on the skin material layer 20 for example.

In case a skin material layer 20 of a floor covering A being structured as mentioned above, a skin material layer with a good cushioning characteristic can be obtained; a thread cast-off or a rupture does not occur due to strong unification of whole skin material layers; an incombustible characteristic is further improved; and flame retardance, fire resistance and flame resistance are improved.

As mentioned above, the floor covering hardly generating hazardous gas A can provide significantly improved heat-setting property without reducing flame resistance, can have greater flame retardance and flame resistance because of higher heat resistance of 150 to 200 C of heat resistance temperature, therefore does not generate hazardous gas even if directly exposed to a fire; and does not flare up because of its self-extinguishing feature and does not burn itself, and damages to backing material itself caused by combustion or fusion are minimal even if an fire ignition occurs; additionally the floor covering hardly generating hazardous gas A can have a most suitable cushioning characteristic as well as good adhesiveness resistant to water, tensile strength and durability with good stability of cutting size; and can have flexibility to be bent or rewound even if used as a tile carpet after cutting process or as a long carpet in designated width and length after cutting, when transported from a plant to a construction site and carried to an actual application place at the construction site, and can have flexibility and elasticity to prevent separation.

Testing methods of smoke emission and combustion toxicity for the floor covering hardly generating hazardous gas of the present invention and test results of measured toxic gas are indicated in the Table 1.

### Testing Method

Tests were conducted in accordance with Part 2 "Smoke and Toxicity Test" of "International Code for the Application of Fire Test Procedures of International Maritime Organization (The Maritime Safety Committee Resolution MSC 61 (67))". Smoke emission tests were conducted in accordance with Part 2 of ISO 5659:1994. FTIR (Fourier-Transform Infrared Spectroscopy) was used for analysis of toxic gas. The floor covering hardly generating hazardous gas mentioned in one embodiment of the present invention (Manufacturer: Yoshida Orimono Co., Ltd, Product Name: Floor Surface Lining Material, Type: YF Tile W, Size: 75mm for each of length and width) was used as testing specimens.

### Test Results

Summary of test results and standard values set forth in the testing method are indicated in the Table 1. The testing specimens meet the standard values for smoke emission and toxicity for each material set forth in Part 2 of the Fire Test Procedures Code based on the criteria thereof.

**[Table 1]**

| Heat Radiation to Specimen | 25(KW/m²) | 25(KW/m²) | 25(KW/m²) | Reference Value |
|---|---|---|---|---|
| Usage of Pilot Flame | Not Used | Not Used | Not Used | Floor Surfacing Material |
| Average of Maximum Emitting Smoke Factors (Dm) | 226.4 | 172.1 | 305.7 | |
| | | | | 300 or less |
| Average Value of Emitting Smoke Factor after 10 Minutes (Ds10) | 135.7 | 135.5 | 228.1 | No Standard |
| Gas Concentration (PPm) | | | | Toxicity Level |
| Carbon Monoxide (CO) | 298 | 657 | 275 | 1450 or less |
| Hydrogen Cyanide (HCN) | 38 | 30 | 19 | 140 or less |
| Hydrochloric Acid (HCL) | N.D. | N.D. | N.D. | 600 or less |
| Hydrogen Bromide (HBr) | N.D. | N.D. | N.D. | 600 or less |
| Hydrogen Fluoride (HF) | N.D. | N.D. | N.D. | 600 or less |
| Nitrogen Oxide (NOx) | 108 | 217 | 180 | 350 or less |
| Sulfurous Acid Gas (SO2) | 87 | 30 | 180 | 200 or less |

| | | | | |
|---|---|---|---|---|
| Note 1.: Relating to Table 1 N.D.: Not Detected | | | | |

### INDUSTRIAL APPLICABILITY

The flame retardant planar element and the floor covering hardly generating hazardous gas using the flame retardant planar element in the present invention have better flame retardance, fire resistance and flame resistance, and are suitable for usage at places of ordinary household where using fire, at the factory using fire as well as at the spots having strict standards for fire prevention in vessels, high-rise buildings, airplanes, automobiles.

### EXPLANATION OF SYMBOLS

A: Floor covering
10: Backing material layer
20: Skin material layer
21: Primary foundation cloth
22: Piles
23: Adhesives
30: Adhesion material layer
31: Mesh fabric
32: Styrene-butadiene-styrene block copolymer composition

## Claims

1. A flame retardant planar element comprising:
a flexible planar element which can be used for a floor covering (A), hardly generating hazardous gas, wherein at least an inorganic substance such as a sodium polyborate is contained in at least any of one surface or other surface of the flexible planar element, and
a thermoplastic resin layer having at least an acetyl group, the thermoplastic resin layer being formed with an EVA-based emulsion coating layer in which EVA-based emulsion including at least a sodium polyborate in an ethylene-vinyl acetate copolymer is coated and dried, the thermoplastic resin layer being formed on at least any of one surface or other surface of the flexible planar element, and
an EVA-based resin layer that is laminated on the EVA-based emulsion coating layer.

2. The flame retardant planar element set forth in claim 1, wherein, in case of a thermoplastic resin layer being formed on at least any of one surface or other surface of the flexible planar element, piles are formed on one surface or other surface of a flexible planar element facing to the thermoplastic resin layer.

3. The flame retardant planar element of claim 2, wherein other flexible planar element is laminated on one surface or other surface of a flexible planar element facing to a surface on which the piles (22) are formed, and at least either one of an EVA-based emulsion coating layer or an EVA-based resin layer is formed on at least any of one surface or other surface of the other flexible planar element.

4. The flame retardant planar element set forth in any of claims 1 to 3, wherein a backing material layer (10) is laminated on the thermoplastic resin layer.

5. The flame retardant planar element set forth in claim 4, wherein a resin sheet is attached to the backing material layer (10) to prevent shrinkage or bending.

6. The flame retardant planar element set forth in any of claims 1 to 5, wherein the flame retardant planar element contains a radiation shielding material.

7. The flame retardant planar element set forth in any of claims 4 to 6, wherein the backing material layer (10) is comprised of at least either one of a pitch-based carbon fiber or a PAN-based carbon fiber and a non-woven fiber assembly such as a polyester-based fiber; and the mixture ratio therefor is 30 to 80 weight percent for at least either one of the pitch-based carbon fiber or PAN-based carbon fiber and 20 to 70 weight percent for the polyester-based fiber; and each fiber's thickness is between 2.0 to 16.0 dtex and cut length is in the range of 20 to 160 mm.

8. The flame retardant planar element set forth in any of claims 4 to 7, wherein weight of the backing material layer (10) is between 0.01 to 1.5 kg/m².

9. The flame retardant planar element set forth in any of claims 4 to 8, wherein thickness of the backing material layer (10) is limited to the range of 3.0 to 15.0 mm through a needle punch process or other processes.

10. A floor covering (A) hardly generating hazardous gas using the flame retardant planar element set forth in any of claims 4 to 9, wherein a skin material layer (20) uses a flame retardant planar element on which piles (22) are formed as a primary foundation cloth (21); the skin material layer (20) and the backing material layer (10) are laminated though an intermediary of the thermoplastic resin layer and/or other adhesion material layer (30); and the thermoplastic resin layer and/or other adhesion material layer (30) integrate a flame retardant planar element which forms the skin material layer (20) and the backing material layer (10), with or without containing a plainly woven mesh fabric.

11. A manufacturing method of a floor covering (A) hardly generating hazardous gas which is cut into a designated size after either one of the following methods, the methods comprising:
forming a backing material layer (10) consisting of a non-woven fiber aggregate by mixing 30 to 80 weight percent of at least either one of pitch-based carbon fibers of which thickness is between 2.0 to 16.0 dtex and cut length is in the range of 20 to 160 mm or PAN-based carbon fibers of which thickness is between 2.0 to 16.0 dtex and cut length is in the range of 20 to 160 mm, and 20 to 70 weight percent of polyester-based fibers of which thickness is between 2.0 to 16.0 dtex and cut length is in the range of 20 to 160 mm,
forming a flame retardant planar element having either one of an EVA-based emulsion coating layer coated and dried with EVA-based emulsion including at least a sodium polyborate in an ethylene-vinyl acetate copolymer on at least any of one surface or other surface of a flexible planar element formed with polyester fibers, or an EVA-based resin layer including at least a sodium polyborate in an ethylene-vinyl acetate copolymer,
forming a skin material layer (20) by forming piles (22) with pile yarns on a surface of one side of the flame retardant planar element so that the flame retardant planar element is used as a primary foudation cloth (21), and
overlaying the backing material layer (10) and a flame retardant planar element which forms the skin material layer (20) and polymerizing to adhere the same by applying press and heat, with or without an intermediary of a plainly woven mesh fabric between the backing material layer (10) and the flame retardant planar element so that an EVA-based resin layer formed on the flame retardant planar element acts as an adhesive material layer (30) on the back side of the flame retardant planar element formed as a skin material layer (20); or
forming an skin material layer (20) by applying adhesive using at least either one of a styrene-butadiene-styrene block copolymer composition (32) or an amorphous olefin polymer composition on the back side of a flame retardant planar element on which the piles (22) are formed, to prevent thread cast-off, and then coating (adhesion material layer 30) a substance in past form using at least either one of a styrene-butadiene-styrene block copolymer composition (32) or a amorphous olefin polymer composition on the backing material layer (10), and then overlaying plainly woven mesh fabrics, and then heating the same, and then overlaying a flame retardant planar element forming the skin material layer (20), and adhesively polymerizing the same.

## Patentansprüche

1. Schwerentflammbares planares Element, umfassend:
ein flexibles planares Element, das als Bodenbelag (A) nutzbar ist, welches kaum gefährliche Gase erzeugt, wobei zumindest eine anorganische Substanz, wie Natriumpolyborat, in zumindest einer der Oberflächen des flexiblen planaren Elements enthalten ist, und
eine thermoplastische Harzschicht mit zumindest einer Acetyl-Gruppe, wobei die thermoplastische Harzschicht mittels einer EVA-basierten Emulsionsbeschichtung gebildet ist, wobei die EVA-basierte Emulsion umfassend zumindest Natriumpolyborat in einem Ethylen-Vinylacetat-Copolymer aufgetragen und getrocknet wird, wobei die thermoplastische Harzschicht zumindest auf einer der beiden Oberflächen des flexiblen planaren Elements gebildet ist, und
eine EVA-basierte Harzschicht, die auf die EVA-basierte Emulsionsbeschichtung laminiert ist.

2. Schwerentflammbares planares Element gemäß Anspruch 1, wobei in dem Falle, dass auf zumindest einer der Oberflächen des flexiblen planaren Element eine thermoplastische Harzschicht gebildet ist, Flor auf der einer der beiden Oberflächen, die der thermoplastischen Harzschicht zugewandt ist, gebildet ist.

3. Schwerentflammbares planares Element gemäß Anspruch 2, wobei ein weiteres flexibles planares Element auf eine der beiden Oberflächen des flexiblen planaren Elements, die der Oberfläche, auf welcher der Flor (22) gebildet ist, zugewandt ist, laminiert ist, und zumindest eine aus einer EVA-basierten Emulsionsbeschichtung oder einer EVA-basierten Harzschicht auf zumindest einer der beiden Oberflächen des weiteren flexiblen planaren Elements gebildet ist.

4. Schwerentflammbares planares Element gemäß einem der Ansprüche 1 bis 3, wobei eine Trägermaterialschicht (10) auf die thermoplastische Harzschicht laminiert ist.

5. Schwerentflammbares planares Element gemäß Anspruch 4, wobei eine Harzplatte mit der Trägermaterialschicht (10) verbunden ist, um ein Schrumpfen oder Verbiegen zu verhindern.

6. Schwerentflammbares planares Element gemäß einem der Ansprüche 1 bis 5, wobei das schwerentflammbare planare Element ein strahlungsabschirmendes Material enthält.

7. Schwerentflammbares planares Element gemäß einem der Ansprüche 4 bis 6, wobei die Trägermaterialschicht (10) zumindest eines aus einer Pech-basierten Kohlefaser oder einer PAN-basierten Kohlefaser und einen nichtgewebten Faserverbund, wie einer Polyester-basierten Faser, umfasst; und ein Mischungsverhältnis davon beträgt 30 bis 80 Gewichts-Prozent der zumindest einen aus der Pech-basierten Kohlefaser oder PAN-basierten Kohlefaser und 20 bis 70 Gewichts-Prozent der Polyester-basierten Faser; und jede der Fasern weist eine Dicke von 2,0 bis 16,0 dtex auf und eine Schnittlänge liegt in einem Bereich von 20 bis 160 mm.

8. Schwerentflammbares planares Element gemäß einem der Ansprüche 4 bis 7, wobei ein Gewicht der Trägermaterialschicht (10) in einem Bereich von 0,01 bis 1,5 kg/m² liegt.

9. Schwerentflammbares planares Element gemäß einem der Ansprüche 4 bis 8, wobei eine Schichtdicke der Trägermaterialschicht (10) auf einen Bereich von 3,0 bis 15,0 mm mittels einer Nadelstichbehandlung oder anderen Behandlungen begrenzt ist.

10. Bodenbelag (A), welcher kaum gefährliche Gase erzeugt, aufweisend ein schwerentflammbares planares Element gemäß einem der Ansprüche 4 bis 9, wobei eine äußere Oberflächenmaterialschicht (20) ein schwerentflammbares planares Element, auf welchem Flor (22) gebildet ist, als einen primären Grundstoff (21) aufweist; wobei die Oberflächenmaterialschicht (20) und die Trägermaterialschicht (10) durch eine Zwischenschicht der thermoplastischen Harzschicht und/oder einer anderen Haftmaterialschicht (30) laminiert sind; und die thermoplastische Harzschicht und/oder die andere Haftmaterialschicht (30) bilden ein schwerentflammbares planares Element aus, welches die Oberflächenmaterialschicht (20) und die Trägermaterialschicht (10) bildet, mit oder ohne Zwischenschaltung einer einfach gewebten Maschengewebeschicht.

11. Verfahren zum Herstellen eines Bodenbelags (A), welcher kaum gefährliche Gase erzeugt, welcher nach dem Herstellen gemäß einem der folgenden Verfahren in eine vorbestimmte Größe geschnitten wird, die Verfahren umfassend:
Bilden einer Trägermaterialschicht (10) bestehend aus einem nichtgewebten Faserverbund, mittels Mischens von 30 bis 80 Gewichts-Prozent zumindest eines aus einer Pech-basierten Kohlefaser, deren Dicke zwischen 2,0 und 16,0 dtex und deren Schnittlänge in einem Bereich von 20 bis 160 mm liegt, oder einer PAN-basierten Kohlefaser, deren Dicke zwischen 2,0 und 16,0 dtex und deren Schnittlänge in einem Bereich von 20 bis 160 mm liegt, mit 20 bis 70 Gewichts-Prozent einer Polyester-basierten Faser, deren Dicke zwischen 2,0 und 16,0 dtex und deren Schnittlänge in einem Bereich von 20 bis 160 mm liegt,
Bilden eines schwerentflammbaren planaren Elements aufweisend entweder eine EVA-basierte Emulsionsbeschichtung, die durch Auftragen und Trocknen einer EVA-basierten Emulsion umfassend zumindest Natriumpolyborat in einem Ethylen-Vinylacetat-Copolymer, auf zumindest einer der beiden Oberflächen eine flexiblen planaren Elements, das aus Polyester-Fasern gebildet ist, erhalten wird, oder eine EVA-basierte Harzschicht umfassend zumindest Natriumpolyborat in einem Ethylen-Vinylacetat-Copolymer,
Bilden einer Oberflächenmaterialschicht (20), indem Flor (22) mit Florfäden auf einer Oberfläche des schwerentflammbaren planaren Elements ausgebildet wird, so dass das schwerentflammbare planare Element als ein primärer Grundstoff verwendet wird, und
Überlagern der Trägermaterialschicht (10) mit dem schwerentflammbaren planaren Element, welches die Oberflächenmaterialschicht (20) bildet, und Polymerisieren um die beiden mittels Druck und Wärme zu verkleben, mit oder ohne Zwischenschaltung einer einfach gewebten Maschengewebeschicht zwischen der Trägermaterialschicht (10) und dem schwerentflammbaren planaren Element, so dass eine auf dem schwerentflammbaren planaren Element gebildete EVA-basierte Harzschicht als eine Haftmaterialschicht (30) auf der Rückseite des schwerentflammbaren planaren Elements, das die Oberflächenmaterialschicht (20) bildet, wirkt; oder
Bilden einer Oberflächenmaterialschicht (20) durch Auftragen eines Klebers unter Verwendung von zumindest einem aus einer Styrol-Butadien-Styrol-Blockcopolymerzusammensetzung (32) oder einer amorphen Olefinpolymerzusammensetzung auf der Rückseite eines schwerentflammbaren planaren Elements, auf dem Flor (22) ausgebildet ist, um ein Ablösen von Fäden zu verhindern, und dann Beschichten (Haftmaterialschicht (30)) einer Substanz in vergangener Form unter Verwendung von zumindest eines aus einer Styrol-Butadien-Styrol-Blockcopolymerzusammensetzung (32) oder einer amorphen Olefinpolymerzusammensetzung auf der Trägermaterialschicht (10), und dann Überlagern mit einfach gewebtem Maschengewebe, und dann Erhitzen desselben, und dann Überlagern mit einem schwerentflammbaren planaren Element, das die Oberflächenmaterialschicht (20) bildet, und dann verklebendes Polymerisieren desselben.

## Revendications

1. Élément planaire ignifuge, comprenant :
un élément planaire souple qui peut servir de revêtement de sol (A), ne générant pratiquement pas de gaz dangereux, dans lequel au moins une substance inorganique telle qu'un polyborate de sodium est contenue dans au moins une surface quelconque d'une surface ou d'une autre surface de l'élément planaire souple, et
une couche de résine thermoplastique comportant au moins un groupe acétyle, la couche de résine thermoplastique étant formée d'une couche d'enduction d'émulsion à base d'EVA dans laquelle une émulsion à base d'EVA comprenant au moins un polyborate de sodium dans un copolymère d'acétate de vinyle-éthylène est enduite et séchée, la couche de résine thermoplastique étant formée sur au moins une surface quelconque d'une première surface ou d'une autre surface de l'élément planaire souple, et
une couche de résine à base d'EVA qui est stratifiée sur la couche d'enduction d'émulsion à base d'EVA.

2. Élément planaire ignifuge selon la revendication 1, dans lequel, dans le cas dans lequel une couche de résine thermoplastique est formée sur au moins une surface quelconque d'une première surface ou d'une autre surface de l'élément planaire souple, des poils sont formés sur une surface ou sur une autre surface d'un élément planaire souple à l'opposé de la couche de résine thermoplastique.

3. Élément planaire ignifuge selon la revendication 2, dans lequel un autre élément planaire souple est stratifié sur une surface ou une autre surface d'un élément planaire souple à l'opposé d'une surface sur laquelle sont formés les poils (22), et au moins l'une ou l'autre d'une couche d'enduction d'émulsion à base d'EVA ou d'une couche de résine à base d'EVA est formée sur une surface quelconque d'une première surface ou d'une autre surface de l'autre élément planaire souple.

4. Élément planaire ignifuge selon l'une quelconque des revendications 1 à 3, dans lequel une couche de matériau de renfort (10) est stratifiée sur la couche de résine thermoplastique.

5. Élément planaire ignifuge selon la revendication 4, dans lequel une feuille de résine est apposée à la couche de matériau de renfort (10) pour empêcher un retrait et une flexion.

6. Élément planaire ignifuge selon l'une quelconque des revendications 1 à 5, dans lequel l'élément planaire ignifuge contient un matériau de protection contre un rayonnement.

7. Élément planaire ignifuge selon l'une quelconque des revendications 4 à 6, dans lequel la couche de matériau de renfort (10) est constituée d'au moins l'une ou l'autre d'une fibre de carbone à base de brai ou d'une fibre de carbone à base de PAN et d'un ensemble de fibres non tissées telles qu'une fibre à base de polyester ; et le rapport de mélange est par conséquent de 30 à 80 % en poids pour l'une ou l'autre de la fibre de carbone à base de brai ou de la fibre de carbone à base de PAN et de 20 à 70 % en poids pour la fibre à base de polyester ; et l'épaisseur de chacune des fibres est comprise entre 2,0 et 16,0 dtex et une longueur de coupe s'inscrit dans la plage de 20 à 160 mm.

8. Élément planaire ignifuge selon l'une quelconque des revendications 4 à 7, dans lequel un poids de la couche de matériau de renfort (10) est compris entre 0,01 et 1,5 kg/m².

9. Élément planaire ignifuge selon l'une quelconque des revendications 4 à 8, dans lequel une épaisseur de la couche de matériau de renfort (10) est limitée à la plage de 3,0 à 15,0 mm par un traitement d'aiguilletage ou par d'autres traitements.

10. Revêtement de sol (A) ne générant pratiquement pas de gaz dangereux faisant appel à l'élément planaire ignifuge selon l'une quelconque des revendications 4 à 9, dans lequel une couche de matériau de peau (20) utilise un élément planaire ignifuge sur lequel sont formées des poils (22) en tant que garniture de support primaire (21) ; la couche de matériau de peau (20) et la couche de matériau de renfort (10) sont stratifiées avec un intermédiaire de la couche de résine thermoplastique et/ou d'une autre couche de matériau d'adhésion (30) ; et la couche de résine thermoplastique et/ou l'autre couche de matériau d'adhésion (30) intègrent un élément planaire ignifuge qui forme la couche de matériau de peau (20) et la couche de matériau de renfort (10), contenant ou ne contenant pas de tissu maillé uni et à trame.

11. Procédé de fabrication d'un revêtement de sol (A) ne générant pratiquement pas de gaz dangereux qui est coupé à une taille souhaitée après l'un ou l'autre des procédés suivants, les procédés comprenant les étapes consistant à :
former une couche de matériau de renfort (10) constituée d'un agrégat de fibres non tissées par un mélange de 30 à 80 % en poids d'au moins les unes ou les autres de fibres de carbone à base de brai dont l'épaisseur est comprise entre 2,0 et 16,0 dtex et dont la longueur de coupe s'inscrit dans la plage de 20 à 160 mm, ou de fibres de carbone à base de PAN dont l'épaisseur est comprise entre 2,0 et 16,0 dtex et dont la longueur de coupe s'inscrit dans la plage de 20 à 160 mm, et de 20 à 70 % en poids de fibres à base de polyester dont l'épaisseur est comprise entre 2,0 et 16,0 dtex et dont la longueur de coupe s'inscrit dans la plage de 20 à 160 mm,
former un élément planaire ignifuge comportant l'une ou l'autre d'une couche d'enduction d'émulsion à base d'EVA enduite et séchée, une émulsion à base d'EVA comprenant au moins un polyborate de sodium dans un copolymère d'acétate de vinyle-éthylène sur au moins une surface quelconque d'une première surface ou d'une autre surface d'un élément planaire souple formé de fibres de polyester, ou d'une couche de résine à base d'EVA comprenant au moins un polyborate de sodium dans un copolymère d'acétate de vinyle-éthylène,
former une couche de matériau de peau (20) par une formation de poils (22) avec des fils de poils sur une surface d'un côté de l'élément planaire ignifuge de sorte que l'élément planaire ignifuge serve de garniture de support primaire (21), et
superposer la couche de matériau de renfort (10) et un élément planaire ignifuge qui forme la couche de matériau de peau (20) et polymériser pour les amener à adhérer par une application de pression et de chaleur, avec ou sans intermédiaire d'un tissu maillé uni et à trame entre la couche de matériau de renfort (10) et l'élément planaire ignifuge de sorte qu'une couche de résine à base d'EVA formée sur l'élément planaire ignifuge serve de couche de matériau adhésif (30) du côté arrière de l'élément planaire ignifuge formé en tant que couche de matériau de peau (20) ; ou
former une couche de matériau de peau (20) par une application d'adhésif au moyen de l'une ou l'autre d'une composition de copolymère à blocs styrène-butadiène-styrène (32) ou d'une composition de copolymère d'oléfine amorphe sur le côté arrière d'un élément planaire ignifuge sur lequel sont formés les poils (22), pour empêcher un démaillage de fils, et enduire ensuite (couche de matériau d'adhésion 30) une substance sous forme de pâte à l'aide d'au moins l'une ou l'autre d'une composition de copolymère à blocs styrène-butadiène-styrène (32) ou d'une composition de polymère d'oléfine amorphe sur la couche de matériau de renfort (10), et superposer ensuite des tissus maillés unis et à trame, et les chauffer par la suite, puis superposer un élément planaire ignifuge formant la couche de matériau de peau (20), et les polymériser de manière adhésive.
